# EUROPÄISCHE PATENTSCHRIFT

(11) **EP 2 461 076 B1**
(45) Veröffentlichungstag und Bekanntmachung des Hinweises auf die Patenterteilung: **31.12.2014**
(21) Anmeldenummer: 10015229.7
(22) Anmeldetag: 02.12.2010
(51) Int. Cl.: F16K 27/04

(54) **Seitenventil**
Lateral valve
Soupape latérale

(43) Veröffentlichungstag der Anmeldung: 06.06.2012
(73) Patentinhaber: Flühs Drehtechnik GmbH, D-58515 Lüdenscheid (DE)
(72) Erfinder: Lange, Lutz, 58511 Lüdenscheid (DE)
(74) Vertreter: Dörner, Martin

(56) Entgegenhaltungen:
- EP-A1- 2 042 791
- DE-A1-102007 033 560
- DE-U1- 8 703 969
- DE-U1- 20 219 008
- US-A- 5 901 735
- US-A1- 2006 016 487

## Beschreibung

Die Erfindung betrifft ein Seitenventil nach dem Oberbegriff des Patentanspruchs 1.

Mithilfe von Seitenventilen wird der Austritt von Medien aus Armaturen mit gleichzeitiger Umlenkung der Fließrichtung gesteuert. Bekannte Seitenventile umfassen eine Außenhülse, in die seitlich ein Anschlussstutzen angebracht ist, sowie eine Innenhülse, welche längs an der Außenhülse angebracht ist, sodass zwischen Innenhülse und Außenhülse ein Zwischenraum gebildet ist. An der Innenhülse liegt ein Ventiloberteil dichtend an, über das die Zuflussmenge steuerbar ist. Die Innenhülse sowie der Anschlussstutzen sind unter Einsatz eines dichtenden Klebers mit der Außenhülse verschraubt, wobei der dichtende Kleber vor dem Einschraubvorgang auf dem Gewindebereich aufgebracht wird.

Nachteilig an den vorbekannten Außenventilen ist, dass der Anschlussstutzen, der einen relativ kleinen Außendurchmesser aufweist, nur eine geringe Verbindungsfläche mit der Außenhülse aufweist, weshalb die Verbindung zwischen Anschlussstutzen und Außenhülse nur bedingt zuverlässig ist. Beispielsweise kann es im Zuge eines Montage- oder Lösevorgangs des Seitenventils an einem Wasserauslauf zu einem Bruch des Klebers zwischen Anschlussstutzen und Außenhülse kommen, wodurch Undichtigkeiten entstehen können.

Ein Beispiel dieser Art von Ventilen ist aus der Druckschrift US 591735 bekannt.

Hier will die Erfindung Abhilfe schaffen. Der Erfindung liegt die Aufgabe zugrunde, ein Seitenventil der vorgenannten Art zu schaffen, bei dem der Anschlussstutzen zuverlässig mit dem Seitenventil verbunden ist. Gemäß der Erfindung wird diese Aufgabe durch die Merkmale des kennzeichnenden Teils des Patentanspruchs 1 gelöst.

Mit der Erfindung ist ein Seitenventil geschaffen, bei dem der Anschlussstutzen zuverlässig mit dem Seitenventil verbunden ist. Durch das Vorsehen eines separaten Verbindungsstücks, über das Außenhülse und Innenhülse miteinander verbunden sind, und an dem der Anschlussstutzen angeformt ist, ist eine einstückige Anformung des Anschlussstutzens ermöglicht. Dabei können bei dieser dreiteiligen Gestaltung des Seitenventils alle Teile als Drehteil hergestellt werden, was eine kostengünstige Herstellung des Seitenventils aus unterschiedlichsten Materialien ermöglicht.

In Weiterbildung der Erfindung weist das Verbindungsstück einen ersten, innenhülsenseitigen Befestigungsabschnitt zur Befestigung der Innenhülse und einen zweiten, außenhülsenseitigen Befestigungsabschnitt zur Befestigung der Außenhülse auf, wobei die Außenhülse einen Befestigungsabschnitt aufweist, der mit dem außenhülsenseitigen Befestigungsabschnitt des Verbindungsstücks korrespondiert. Der außenhülsenseitige und der innenhülsenseitige Befestigungsabschnitt des Verbindungsstücks sind als Innengewinde und der Befestigungsabschnitt der Außenhülse sowie der Befestigungsabschnitt der Innenhülse als Außengewinde ausgebildet. Hierdurch ist eine gute Dichtigkeit des Seitenventils erzielt. Außenhülse sowie Innenhülse sind so von dem Verbindungsstück umschlossen und einfach an diesem montierbar.

In weiterer Ausgestaltung der Erfindung begrenzen der außenhülsenseitige Befestigungsabschnitt und der innenhülsenseitige Befestigungsabschnitt des Verbindungsstücks eine Zwischenfläche, in die eine in das Verbindungsstück eingebrachte Bohrung ragt, die innerhalb des seitlichen Anschlussstutzens angeordnet ist. Hierdurch ist ein gleichmäßiger Wasserstrom erzielt.

In Weiterbildung der Erfindung münden der innenhülsenseitige Befestigungsabschnitt und/oder der außenhülsenseitige Befestigungsabschnitt des Verbindungsstücks in einen Absatz, an dem eine Dichtung anliegt. Hierdurch ist die Abdichtung zwischen Innenhülse und/oder Außenhülse und dem Verbindungsstück erhöht.

In weiterer Ausgestaltung der Erfindung weist die Innenhülse an ihrem dem Anschlussgewinde entgegengesetzten Ende einen umlaufenden Kragen auf. Hierdurch ist eine Anlagefläche für ein Dichtelement eines in die Außenhülse eingeschraubten Ventiloberteils erzielt.

ln Weiterbildung der Erfindung weist die Innenhülse beabstandet zum Verbindungsstück einen außendurchmesservergrößerten Abschnitt auf, der beidseitig von Abschnitten mit einem relativ zu diesem verminderten Außenmesser umgeben ist. Hierdurch ist ein gutes Strömungsverhalten des durchfließenden Wassers bewirkt.

Vorteilhaft ist das Verbindungsstück als einteiliges Drehteil ausgebildet. Hierdurch ist eine kostengünstige Herstellung des Verbindungsstücks aus unterschiedlichsten Materialien ermöglicht.
In weiterer Ausgestaltung der Erfindung ist der als Außengewinde ausgebildete Befestigungsabschnitt der Außenhülse von einem Absatz begrenzt, der einen Anschlag bildet, der an einer ebenen, den als Innengewinde ausgestalteten außenhülsenseitigen Befestigungsabschnitt des Verbindungsstücks umgebenden Fläche anliegt. Hierdurch ist eine hohe Dichtigkeit zwischen Außenhülse und Verbindungsstück erzielt. Alternativ kann der Anschlag auch durch die Stirnfläche der Außenhülse gebildet sein, die innerhalb des Verbindungsstücks an einer Anschlagfläche anliegt.
ln weiterer Ausgestaltung der Erfindung ist der als Außengewinde ausgestaltete Befestigungsabschnitt der Innenhülse von einem Absatz begrenzt, der einen Anschlag bildet, der an einer ebenen, den als Innengewinde ausgestalteten innenhülsenseitigen Befestigungsabschnitt des Verbindungsstücks umgebenden Fläche anliegt. Hierdurch ist eine gute Dichtigkeit zwischen Innenhülse und Verbindungsstück erzielbar. Alternativ kann der Anschlag auch derart angeordnet sein, dass er innerhalb des Verbindungsstücks an einer Anschlagfläche anliegt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

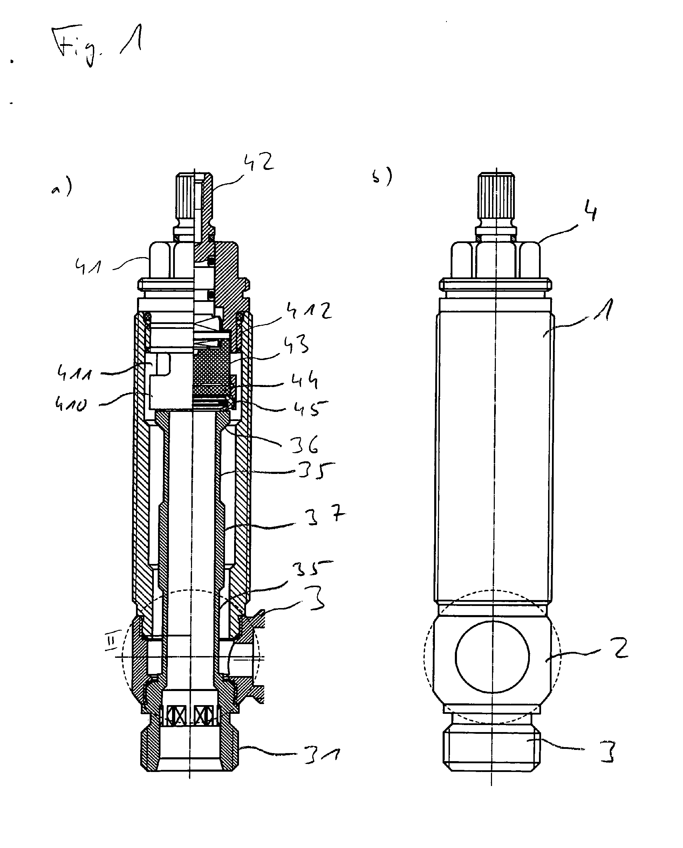

- Figur 1: die Darstellung eines Seitenventils;
- a): in Teilschnittdarstellung
- b): in der Seitenansicht;

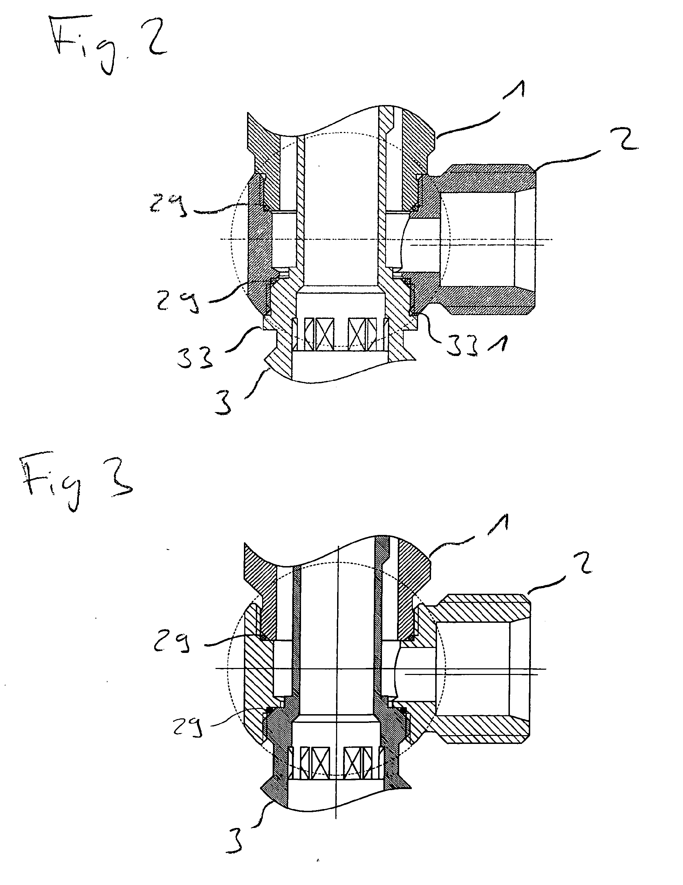

- Figur 2: die Detailansicht des Ausschnitts ll des Seitenventils aus Figur 1a);
- Figur 3: die Detailansicht eine Ausschnitts entsprechend Figur 2 eines Seitenventils mit nach innerhalb des Verbindungsstücks verlegten Anschlägen von Innen- und Außenhülse;

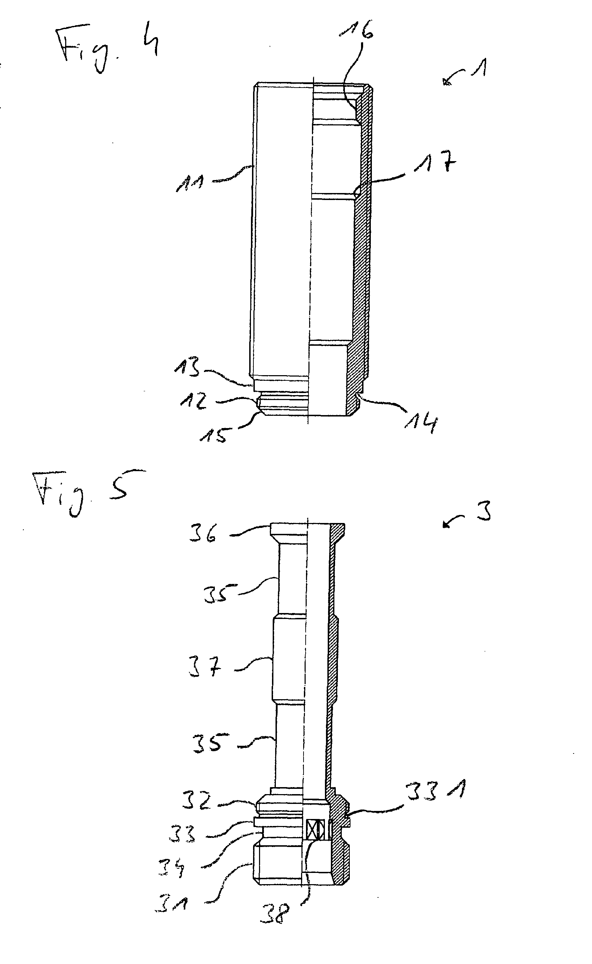

- Figur 4: die Darstellung der Außenhülse des Seitenventils aus Figur 1 in Teilschnittdarstellung;
- Figur 5: die Darstellung der Innenhülse des Seitenventils aus Figur 1 in Teilschnittdarstellung und

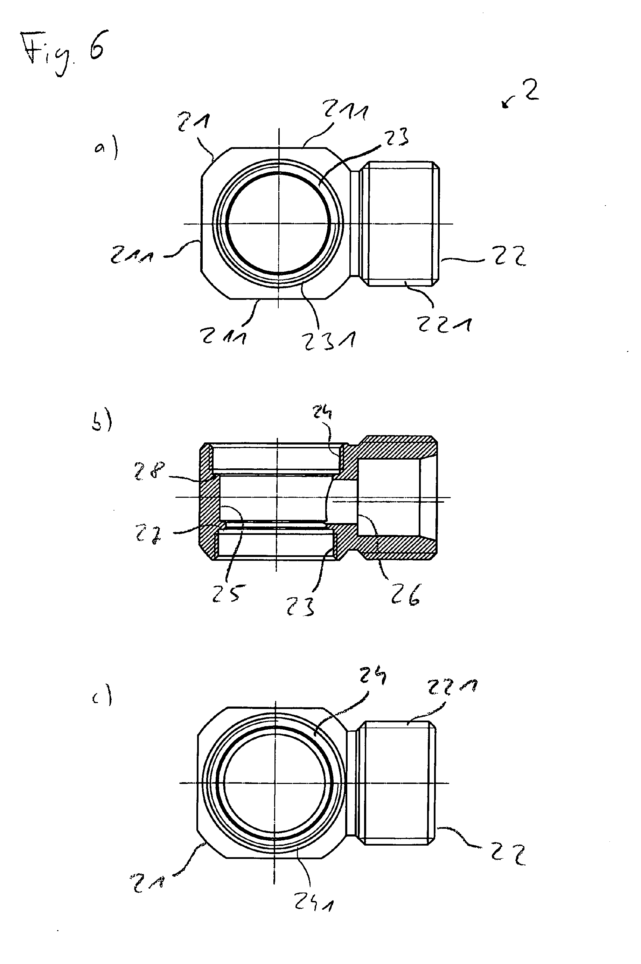

- Figur 6: die Darstellung des Verbindungsstücks des Seitenventils aus Figur 1
- a): in der Ansicht von unten
- b): in Schnittdarstellung
- c): in der Ansicht von oben.

Das als Ausführungsbeispiel gewählte Seitenventil besteht im Wesentlichen aus einer Außenhülse 1 und einer Innenhülse 3, die über ein Verbindungsstück 2 miteinander verbunden sind, sowie einem Ventiloberteil 4.

Die Außenhülse 1 ist im Ausführungsbeispiel aus Messing hergestellt und im Wesentlichen hohlzylindrisch ausgebildet. Über etwa 5/4 der Länge der Außenhülse ist in diese eine Außengewinde 11 eingebracht. Beabstandet zu dem Außengewinde 11 ist in die Außenhülse 1 weiterhin ein durchmesservermindertes zweites Außengewinde 12 eingebracht, wobei zwischen dem zweiten Außengewinde 12 und dem ersten Außengewinde 11 ein Absatz 13 eingeformt ist, durch den ein Anschlag 14 gebildet ist. Das zweite Außengewinde 12 mündet endseitig in eine Fase 15, durch die ein vereinfachtes Einschrauben in das Verbindungsstück 2 ermöglicht ist. Zudem bildet die Fase 15 eine Dichtfläche, welche an dem an den Anschlag 28 des Verbindungsstücks 2 angelegten Dichtungsring 29 dichtend anliegt. An ihrem der Fase 15 abgewandten Ende ist weiterhin auf der Innenseite der Außenhülse 1 ein Innengewinde 16 zur Befestigung eines Ventiloberteils 4 eingebracht. Der Innendurchmesser der Außenhülse 1 ist durch zwei beabstandet zueinander in der Innenwandung der Außenhülse angeordnete Absätze 17 in Richtung der Fase 15 stufenweise vermindert ausgeführt.

Das Verbindungsstück 2 ist im Ausführungsbeispiel aus Messing hergestellt und besteht im Wesentlichen aus einer Muffe 21, an die ein Anschlussstutzen 22 angeformt ist. ln die kugelausschnittartig ausgebildete Muffe 21 sind umlaufend drei Planflächen 211 zur besseren Handhabung des Verbindungsstücks 2 angeformt. In dem zylinderförmigen Durchgang der Muffe 21 sind endseitig zwei Innengewinde 23, 24 eingebracht, zwischen denen eine Zwischenfläche 25 angeordnet ist. Das im Verhältnis zum zweiten Innengewinde 24 durchmesserverkleinerte erste Innengewinde 23 dient der Befestigung der Innenhülse 3, das zweite Innengewinde 24 dient der Befestigung der Außenhülse 1 über das mit diesem korrespondierende zweite Außengewinde 12. Gegenüber der Zwischenfläche 25 ist das erste Innengewinde durch einen Absatz 27 und das zweite Innengewinde durch einen Absatz 28 begrenzt. Die Absätze 27, 28 dienen der Anlage eines umlaufenden Dichtungsrings 29. Das erste Innengewinde 23 ist endseitig umlaufend von einer Planfläche 231 und das zweite Innengewinde endseitig von einer Planfläche 241 umgeben. Die Planfächen 231, 241 dienen der Anlage von Außenhülse 1 und Innenhülse 3.

Der an die Muffe 21 angeformte Anschlussstutzen 22 ist im Wesentlichen hohlzylindrisch ausgebildet, wobei in seiner äußeren Mantelfläche ein Anschlussgewinde 221 eingeformt ist. Innerhalb des Anschlussstutzens 22 ist von diesem umschlossen eine Bohrung 26 in die Muffe 21 eingebracht, welche durch die Zwischenfläche 25 hindurchtritt. Der Anschlussstutzen 22 ist im Ausführungsbeispiel als Messingdrehteil ausgebildet.

Die Innenhülse 3 ist im Ausführungsbeispiel ebenfalls als weitgehend hohlzylindrisches Messingdrehteil ausgeführt. An einem Ende ist in die Innenhülse 3 umlaufend ein Anschlussgewinde 31 eingebracht. Anstelle des Anschlussgewindes kann auch ein sonstiges Anschlussstück, beispielsweise ein Bajonettverschluss angeordnet sein. Beabstandet zu dem Anschlussgewinde 31 ist weiterhin ein im Durchmesser vermindertes Einschraubgewinde 32 angeordnet. Das Einschraubgewinde 32 ist an seiner dem Anschlussgewinde 31 zugewandten Seite von einem Absatz 33 begrenzt, der einen Anschlag 331 bildet. Zwischen dem Absatz 33 und dem Anschlussgewinde 31 ist eine Nut 34 angeordnet. An seinem dem Anschlussgewinde 31 entgegengesetzten Ende ist an die Innenhülse 3 ein umlaufender Kragen 36 angeformt. Zwischen dem Kragen 36 und dem Einschraubgewinde 32 ist beabstandet zum Verbindungsstück 2 ein außendurchmesservergrößerter Abschnitt 37 angeformt, der beidseitig von Abschnitten 35 mit einem relativ zu diesem verminderten Außendurchmesser umgeben ist. In Höhe der Nut 34 ist in der Innenhülse 3 in ihrer Innenwandung weiterhin ein Innensechskant 38 zur Handhabung der Innenhülse 3 eingeformt.

Das im Ausführungsbeispiel eingesetzte Ventiloberteil 4 weist ein Kopfstück 41 auf, das von einer in diesem radial geführten Spindel 42 mittig durchsetzt ist. Über die Spindel 42 ist ein Ventil betätigbar, das auf dem Kragen 36 der Innenhülse 3 zur Anlage kommt. Das Ventil ist im Ausführungsbeispiel von einer Steuerscheibe 43 und einer Durchlassscheibe 44 gebildet. Die Steuerscheibe 43 ist mit der Spindel 42 formschlüssig verbunden. An ihrer der Spindel 42 abgewandten Seite der Steuerscheibe 43 ist in dem Kopfstück 41 die Durchlassscheibe 44 vorgesehen, an die sich ein Dichtungselement 45 anschließt, welches auf dem Kragen 36 der Innenhülse 3 zur Anlage kommt.

Das Kopfstück 41 besteht im Wesentlichen aus einem symmetrischen Hohlkörper, dessen beide Stirnflächen offen sind. Auf seiner der Innenhülse 3 zugewandten Seite weist das Kopfstück 41 einen hülsenartigen Teil 410 auf. In dem Teil 410 sind Durchtrittsfenster 411 vorgesehen. Im Anschluss an die Durchtrittsfenster 411 ist das Kopfstück 41 außen mit einem Gewinde 412 in das Innengewinde 16 der Außenhülse 1 schraubbar. Nach dem Einschrauben liegt das Dichtungselement 45 auf dem Kragen 36 der Innenhülse 3 auf. Derartige Ventiloberteile sind dem Fachmann beispielsweise aus der DE 3207895 C2 bekannt.

Bei der Montage des Seitenventils werden zunächst Dichtungsringe 29 an die Absätze 27, 28 der Muffe 21 angelegt. Anschließend wird die Außenhülse mit ihrem zweiten Außengewinde 12, das bis zum Anschlag 14 mit einem dichtenden Kleber versehen wird, in das zweite Innengewinde 24 des Verbindungsstücks 2 eingeschraubt, bis der Anschlag 14 an der Planfläche 241 anliegt. Sodann wird die Innenhülse durch das Verbindungsstück 2 in die Außenhülse 1 eingeführt, wobei das Einschraubgewinde 32, welches ebenfalls bis zum Anschlag 331 mit einem dichtenden Kleber versehen wird, in das erste Innengewinde 23 des Verbindungsstücks 2 eingeschraubt wird, bis der Anschlag 331 an der Planfläche 231 des Verbindungsstücks 2 anliegt. Dabei werden die Dichtungsringe 29 durch die Außenhülse 1 bzw. die Innenhülse 3 komprimiert, wodurch eine gute Dichtwirkung erzielt wird.

Das Ventiloberteil 4 wird mit dem Anschlussgewinde 412 in das Innengewinde 16 der Außenhülse 1 eingeschraubt, sodass das Dichtungselement 45 auf den Kragen 36 der Innenhülse 3 abdichtend aufliegt. Die Durchtrittsfenster 411 münden dabei in den zwischen Außenhülse 1 und Innenhülse 3 gebildeten Zwischenraum.

In montiertem Zustand des Seitenventils tritt das Medium durch die Innenhülse 3 in das Seitenventil ein. Bei geöffnetem Ventiloberteil 4 tritt das Medium durch die Durchtrittsfenster 411 durch und strömt in entgegengesetzter Richtung durch den zwischen Außenhülse 1 und Innenhülse 3 gebildeten Zwischenraum, bis es durch die Bohrung 26 des Verbindungsstücks 2 durch den Anschlussstutzen 22 austritt.

## Patentansprüche

1. Seitenventil mit einem seitlichen Anschlussstutzen, umfassend eine Außenhülse und eine Innenhülse, die einen Befestigungsabschnitt zur außenhülsenseitigen Befestigung sowie ein Anschlussstück zum Anschluss an eine Wasserzufuhr aufweist, wobei Außenhülse (1) und Innenhülse (3) über ein separates Verbindungsstück (2) miteinander verbunden sind, an dem der Anschlussstutzen (22) angeformt ist, **dadurch gekennzeichnet, dass** der innenhülsenseitige Befestigungsabschnitt des Verbindungsstücks (2) als Innengewinde (23) ausgestaltet ist, wobei der Befestigungsabschnitt der Innenhülse als Außengewinde (32) ausgebildet ist, das mit dem Innengewinde (23) des Verbindungsstücks (2) korrespondiert und dass der außenhülsenseitige Befestigungsabschnitt des Verbindungsstücks (2) als Innengewinde (24) ausgestaltet ist, wobei der Befestigungsabschnitt der Außenhülse als Außengewinde (12) ausgebildet ist, das mit dem Innengewinde (23) des Verbindungsstücks (2) korrespondiert.

2. Seitenventil nach Anspruch 1, **dadurch gekennzeichnet, dass** das Verbindungsstück (2) einen ersten, innenhülsenseitigen Befestigungsabschnitt zur Befestigung der Innenhülse (3) und einen zweiten, außenhülsenseitigen Befestigungsabschnitt zur Befestigung der Außenhülse (1) aufweist, wobei die Außenhülse (1) einen Befestigungsabschnitt aufweist, der mit dem außenhülsenseitigen Befestigungsabschnitt des Verbindungsstücks (2) korrespondiert.

3. Seitenventil nach Anspruch 2, **dadurch gekennzeichnet, dass** der außenhülsenseitige Befestigungsabschnitt und der innenhülsenseitige Befestigungsabschnitt des Verbindungsstücks (2) eine Zwischenfläche (25) begrenzen, in die eine in das Verbindungsstück (2) eingebrachte Bohrung (26) ragt, die innerhalb des seitlichen Anschlussstutzens (22) angeordnet ist.

4. Seitenventil nach einem der Ansprüche 2 und 3, **dadurch gekennzeichnet, dass** der innenhülsenseitige Befestigungsabschnitt und/oder der außenhülsenseitige Befestigungsabschnitt des Verbindungsstücks (2) in einem Absatz (27, 28) mündet, der eine Dichtung (29) aufnimmt.

5. Seitenventil nach einem der vorgenannten Ansprüche, **dadurch gekennzeichnet, dass** die Innenhülse (3) an einem Ende einen umlaufenden Kragen (36) aufweist.

6. Seitenventil nach einem der vorgenannten Ansprüche, **dadurch gekennzeichnet, dass** das Verbindungsstück (2) als einteiliges Drehteil ausgebildet ist.

7. Seitenventil nach einem der Ansprüche 2 bis 7, **dadurch gekennzeichnet, dass** der Befestigungsabschnitt der Außenhülse (1) von einem Absatz (13) begrenzt ist, der einen Anschlag (14) bildet, der an einer ebenen, den außenhülsenseitigen Befestigungsabschnitt des Verbindungsstücks (2) umgebenden Fläche (241) anliegt.

8. Seitenventil nach einem der vorgenannten Ansprüche, **dadurch gekennzeichnet, dass** der Befestigungsabschnitt der Innenhülse (3) von einem Absatz (33) begrenzt ist, der einen Anschlag (331) bildet, der an einer ebenen, den innenhülsenseitigen Befestigungsabschnitt des Verbindungsstücks (2) umgebenden Fläche (231) anliegt.

## Claims

1. Lateral valve with a connecting sleeve at the side comprising an outer case and an inner case which has a fastening section for attachment on the outer-case side and a connection piece for connection to a water supply, where the outer case (1) and the inner case (3) are joined to one another by a separate connection piece (2) on which the connecting sleeve (22) is formed, **characterised in that** the fastening section on the inner-case side of the connection piece (2) is formed as an interior thread (23), where the fastening section of the inner case is formed as an exterior thread (32) which corresponds to the interior thread (23) of the connection piece (2) and that the fastening section on the outer-case side of the connection piece (2) is formed as an interior thread (24), where fastening section of the outer case is formed as an exterior thread (12) which corresponds to the interior thread (23) of the connection piece (2).

2. Lateral valve in accordance with claim 1, **characterised in that** the connection piece (2) has a first fastening section on the inner-case side for attaching the inner case (3) and a second fastening section on the outer-case side for attaching the outer case (1), where the outer case (1) has a fastening section which corresponds to the fastening section on the outer-case side of the connection piece (2).

3. Lateral valve in accordance with claim 2, **characterised in that** the fastening section on the outer-case side and the fastening section on the inner-case side of the connection piece (2) border on an intermediate surface (25) into which a bore (26) in the connection piece (2) extends which is arranged within the lateral connecting sleeve (22).

4. Lateral valve in accordance with claim 2 or claim 3, **characterised in that** the fastening section on the inner-case side and/or the fastening section on the outer-case side of the connection piece (2) open into a shoulder (27, 28) which receives a seal (29).

5. Lateral valve in accordance with any of the above claims, **characterised in that** the inner case (5) has a circumferential collar (36) at one end.

6. Lateral valve in accordance with any of the above claims, **characterised in that** the connection piece (2) is formed as a turned part in one single piece.

7. Lateral valve in accordance with any of the claims 2 to 7, **characterised in that** the fastening section of the outer sleeve (1) is delimited by a shoulder (18) which forms a stop (14) which lies against a flat surface (241) surrounding the fastening section on the outer-case side of the connection piece (2).

8. Lateral valve in accordance with any of the above claims, **characterised in that** the fastening section of the inner sleeve (3) is delimited by a shoulder (33) which forms a stop (331) which lies against a flat surface (231) surrounding the fastening section on the inner-case side of the connection piece (2).

## Revendications

1. Soupape latérale équipée d'un embout latéral de raccordement, comprenant une douille extérieure et une douille intérieure qui présente un segment destiné à la fixation sur le côté de la douille extérieure, ainsi qu'une pièce destinée au raccordement à une alimentation en eau, sachant que la douille extérieure (1) et la douille intérieure (3) sont reliées entre elles via une pièce de liaison (2) dont l'embout de raccordement (22) épouse la forme, **caractérisée en ce que** le segment de fixation, sur le côté de la douille intérieure, de la pièce de liaison (2) est configuré en taraudage (23), sachant que le segment de fixation de la douille intérieure est configuré en filetage (32) qui épouse le taraudage (23) de la pièce de liaison (2), et que le segment de fixation de la pièce de liaison (2) sur le côté de la douille extérieure est configuré en taraudage (24), sachant que le segment de fixation de la douille extérieure est configuré en filetage (12) épousant le taraudage (23) de la pièce de liaison (2).

2. Soupape latérale selon la revendication 1, **caractérisée en ce que** la pièce de liaison (2) présente un premier segment de fixation sur le côté de la douille intérieure, segment qui sert à fixer la douille intérieure (3), et un deuxième segment de fixation, sur le côté de la douille extérieure (1), qui sert à fixer cette dernière, sachant que la douille extérieure (1) présente un segment de fixation épousant le segment de fixation de la pièce de liaison (2) sur le côté de la douille extérieure.

3. Soupape latérale selon la revendication 2, **caractérisée en ce que** le segment de fixation sur le côté de la douille extérieure et le segment de fixation sur le côté de la douille intérieure de la pièce de fixation (2) délimitent une surface intermédiaire (25) dans laquelle fait saillie un alésage (26) ménagé dans la pièce de liaison (2), alésage qui est agencé à l'intérieur de l'embout de raccordement (22) latéral.

4. Soupape latérale selon l'une des revendications 2 et 3, **caractérisée en ce que** le segment de fixation sur le côté de la douille intérieure et/ou le segment de fixation sur le côté de la douille extérieure, segments que comporte la pièce de liaison (2), aboutissent dans un retrait (27, 28) qui reçoit un joint (29).

5. Soupape latérale selon l'une des revendications précédentes, **caractérisée en ce que** la douille intérieure (3) présente un col périphérique (36) à une extrémité.

6. Soupape latérale selon l'une des revendications précédentes, **caractérisée en ce que** la pièce de liaison (2) est configurée sous forme de pièce monobloc tournée.

7. Soupape latérale selon l'une des revendications 2 à 7, **caractérisée en ce que** le segment de fixation de la douille extérieure (1) est limité par un retrait (13) formant une butée (14) qui applique contre une surface plane (241) entourant le segment de fixation, sur le côté de la douille extérieure, de la pièce de liaison (2).

8. Soupape latérale selon l'une des revendications précitées, **caractérisée en ce que** le segment de fixation de la douille intérieure (3) est limité par un retrait (33) formant une butée (331) qui applique contre une surface plane (231) entourant le segment de fixation, sur le côté de la douille intérieure, de la pièce de liaison (2).
